# EUROPEAN PATENT APPLICATION

(11) **EP 4 738 465 A1**
(43) Date of publication of application: **06.05.2026**
(21) Application number: 25212520.8
(22) Date of filing: 30.10.2025
(51) Int. Cl.: H01M 4/36, H01M 4/62, H01M 4/131, H01M 4/136, H01M 4/02

(54) **CATHODE FOR LITHIUM SECONDARY BATTERY AND LITHIUM SECONDARY BATTERY INCLUDING THE SAME**

(30) Priority: 01.11.2024 KR 20240153381
(71) Applicant: SK On Co., Ltd., Seoul 03161 (KR)
(72) Inventor: KIM, Jae Ram, 34124 Daejeon (KR); BAE, Ji Hee, 34124 Daejeon (KR); SONG, Yeon Hwa, 34124 Daejeon (KR); YEON, Jeong Seok, 34124 Daejeon (KR)
(74) Representative: Stolmár & Partner Patentanwälte PartG mbB

(57) **Abstract**

A cathode for a lithium secondary battery includes a cathode current collector; and a cathode mixture layer on at least one surface of the cathode current collector, wherein the cathode mixture layer includes a first cathode mixture layer on the cathode current collector; and a second cathode mixture layer on the first cathode mixture layer, the first cathode mixture layer and the second cathode mixture layer respectively independently include lithium metal phosphate and lithium transition metal oxide as active materials, a weight of the lithium metal phosphate included in the first cathode mixture layer exceeds a weight of the lithium transition metal oxide, the first cathode mixture layer includes a spherical-type conductive material, and the second cathode mixture layer includes a needle-type conductive material.

## Description

### TECHNICAL FIELD

The present disclosure relates to a cathode for a lithium secondary battery and a lithium secondary battery including the same.

### BACKGROUND

Recently, research on an electric vehicle (EV) that may replace a vehicle using a fossil fuel, such as a gasoline vehicle and a diesel vehicle, which is one of the main causes of air pollution, is being actively conducted, and a lithium secondary battery with high discharge voltage and output stability is mainly used as a power source for such an electric vehicle (EV).

In order to improve the performance of the lithium secondary battery, it is necessary to develop a technology that can improve energy density and safety of a cathode for the lithium secondary battery.

### SUMMARY

According to an aspect of the present disclosure, a cathode for a lithium secondary battery with improved safety may be provided.

According to another aspect of the present disclosure, energy density of a cathode for a lithium secondary battery may be improved.

According to another aspect of the present disclosure, lifespan performance of a cathode for a lithium secondary battery may be improved.

According to an aspect of the present disclosure, a cathode for a lithium secondary battery includes a cathode current collector; and a cathode mixture layer on at least one surface of the cathode current collector, wherein the cathode mixture layer includes a first cathode mixture layer on the cathode current collector; and a second cathode mixture layer on the first cathode mixture layer, wherein the first cathode mixture layer and the second cathode mixture layer respectively independently include lithium metal phosphate and lithium transition metal oxide as active materials, a weight of the lithium metal phosphate included in the first cathode mixture layer exceeds a weight of the lithium transition metal oxide, and the first cathode mixture layer includes a spherical-type conductive material, and the second cathode mixture layer includes a needle-type conductive material.

In some embodiments, a content of the spherical-type conductive material included in the first cathode mixture layer may be 0.1 wt% to 0.5 wt%.

In some embodiments, a content of the needle-type conductive material included in the second cathode mixture layer may be 0.5 wt% to 1.5 wt%.

In some embodiments, the first cathode mixture layer may further include a needle-type conductive material.

In some embodiments, the second cathode mixture layer may not include a spherical-type conductive material.

In some embodiments, the weight of the needle-type conductive material included in the first cathode mixture layer may be less than or equal to the weight of the needle-type conductive material included in the second cathode mixture layer.

In some embodiments, the content of the needle-type conductive material included in the first cathode mixture layer may be 0.5 wt% to 0.7 wt%.

In some embodiments, the second cathode mixture layer may further include a spherical-type conductive material, and the content of the spherical-type conductive material included in the second cathode mixture layer may be 0.3 wt% to 0.5 wt%.

In some embodiments, the spherical-type conductive material may include carbon black.

In some embodiments, the needle-type conductive material may include carbon nanotubes (CNT).

A lithium secondary battery according to an embodiment includes the cathode for a lithium secondary battery of any one of the above-described embodiments.

### BRIEF DESCRIPTION OF DRAWINGS

Certain aspects, features, and advantages of the disclosed technology may be illustrated by the following detailed description with reference to the accompanying drawings.

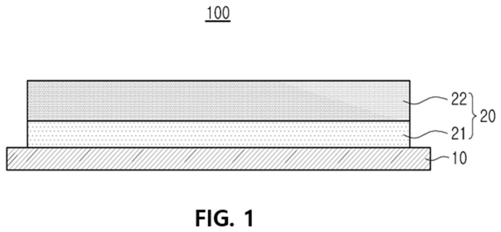

FIG. 1 is a cross-sectional view conceptually illustrating a cathode for a lithium secondary battery according to an embodiment.

### DETAILED DESCRIPTION

Hereinafter, the technology disclosed in this present specification and embodiments thereof will be described in detail with reference to the attached drawings.

As demand for a lithium secondary battery increases, a technology that can manufacture a cathode having excellent performance is required. Related thereto, in the case of an NCM cell using a lithium nickel-cobalt-manganese oxide (NCM) as a cathode active material, the NCM cell has excellent energy density, but has the disadvantage of relatively low safety and high cost. On the other hand, in the case of a cell using a lithium-phosphate-based active material with an olivine structure, such as a lithium-iron phosphate (LFP)-based active material, as a cathode active material, the cell has excellent safety and price competitiveness, but has the disadvantage of relatively low energy density and low-temperature performance.

According to an embodiment of the present disclosure, the above-described problems may be alleviated to provide a cathode for a lithium secondary battery with excellent energy density, safety, lifespan performance, price competitiveness, and the like. Hereinafter, the embodiments of the present disclosure will be described in detail with reference to FIG. 1.

FIG. 1 is a cross-sectional view conceptually illustrating a cathode for a lithium secondary battery according to an embodiment.

### Cathode for Lithium Secondary Battery

A cathode 100 for a lithium secondary battery according to an embodiment includes a cathode current collector 10; and a cathode mixture layer 20 on at least one surface of the cathode current collector, wherein the cathode mixture layer includes a first cathode mixture layer 21 on the cathode current collector 10; and a second cathode mixture layer 22 on the first cathode mixture layer. The first cathode mixture layer 21 and the second cathode mixture layer 22 respectively independently include lithium metal phosphate and lithium transition metal oxide as active materials, and a weight of the lithium metal phosphate included in the first cathode mixture layer 21 exceeds a weight of the lithium transition metal oxide, and the first cathode mixture layer 21 includes a spherical-type conductive material, and the second cathode mixture layer 22 includes a needle-type conductive material.

The lithium transition metal oxide may include an active material such as lithium nickel-cobalt-manganese oxide (NCM) having excellent energy density, and the lithium metal phosphate may include an active material such as lithium iron phosphate (LFP) as an active material having an olivine structure having excellent structural stability.

The cathode 100 for the lithium secondary battery may have a multilayer structure including a mixture of lithium transition metal oxide and lithium metal phosphate as active materials (see FIG. 1), and may complement disadvantages of each active material while maximizing advantages thereof, and contributing to further cell performance improvement.

Components of the cathode current collector 10 are not particularly limited. For example, the cathode current collector may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In some embodiments, the cathode current collector may be aluminum foil (Al-foil).

A thickness of the cathode current collector 10 is not particularly limited. For example, the thickness of the cathode current collector may be 0.1 to 50 µm.

In some embodiments, the cathode 100 for the lithium secondary battery may have a content of lithium metal phosphate included in the first cathode mixture layer 21, a lower layer, greater than a content of lithium metal phosphate included in the second cathode mixture layer 22, an upper layer. Specifically, a weight of the lithium metal phosphate included in the first cathode mixture layer 21 may be greater than a weight of the lithium metal phosphate included in the second cathode mixture layer 22. When a mixture layer having a relatively higher content of the lithium metal phosphate is applied as the first cathode mixture layer 21, the lower layer, the resistance characteristics and lifespan performance of a cathode and a lithium secondary battery including the same may be excellent.

In the first cathode mixture layer 21, the lower layer, adjacent to the cathode current collector 10, the content of lithium metal phosphate exceeds the content of lithium transition metal oxide. Specifically, the weight of lithium metal phosphate included in the first cathode mixture layer 21 may exceed the weight of lithium transition metal oxide. In this case, the safety and lifespan performance of the lithium secondary battery may be improved by disposing a first cathode mixture layer 21 having a relatively higher content of lithium metal phosphate with excellent structural stability in the lower layer, adjacent to the cathode current collector 10.

In some embodiments, a weight ratio of the lithium metal phosphate and lithium transition metal oxide included in the first cathode mixture layer 21 may be 70:30 to 99:1. Specifically, the weight ratio of the lithium metal phosphate and lithium transition metal oxide included in the first cathode mixture layer 21 may be 85:15 to 95:5. In this case, the energy density of the cathode 100 for the lithium secondary battery can be secured while significantly improving the safety of the battery.

In some embodiments, the weight ratio of the lithium metal phosphate and lithium transition metal oxide included in the second cathode mixture layer 22 may be 30:70 to 70:30. Specifically, the weight ratio of the lithium metal phosphate and lithium transition metal oxide included in the second cathode mixture layer 22 may be 40:60 to 60:40, or 45:55 to 55:45. In this case, the safety of the cathode 100 for the lithium secondary battery can be secured while significantly improving the energy density of the battery, and the cell resistance can also be reduced and the lifespan performance of the battery can also be improved.

In some embodiments, a content of lithium metal phosphate in the first cathode mixture layer 21 may be 75 wt% to 95 wt%. Specifically, the content of lithium metal phosphate in the first cathode mixture layer 21 may be 80 wt% or more and 90 wt% or less.

In some embodiments, the content of the lithium transition metal oxide included in the first cathode mixture layer 21 may be 1 wt% to 20 wt%. Specifically, the content of the lithium transition metal oxide included in the first cathode mixture layer 21 may be 5 wt% or more and 10 wt% or less.

In some embodiments, a content of lithium metal phosphate included in the second cathode mixture layer 22 may be 40 wt% to 60 wt%. Specifically, the content of lithium metal phosphate included in the second cathode mixture layer 22 may be 45 wt% or more and 55 wt% or less.

In some embodiments, the content of lithium transition metal oxide included in the second cathode mixture layer 22 may be 40 wt% to 60 wt%. Specifically, the content of lithium transition metal oxide included in the second cathode mixture layer 22 may be 45 wt% or more and 55 wt% or less.

In some embodiments, the cathode 100 for the lithium secondary battery may have a content of lithium metal phosphate greater than or equal to the content of lithium transition metal oxide, based on the entire cathode mixture layer 20. Specifically, the total weight of the lithium metal phosphate included in the cathode mixture layer 20 may be greater than or equal to the total weight of the lithium transition metal oxide included in the cathode mixture layer 20. In this case, the safety and energy density of the cathode 100 for the lithium secondary battery can be secured simultaneously.

In some embodiments, a weight ratio of the lithium metal phosphate and lithium transition metal oxide included in the cathode mixture layer 20 may be 60:40 to 80:20. Specifically, the weight ratio of the lithium metal phosphate and lithium transition metal oxide included in the cathode mixture layer 20 may be 65:35 to 75:25.

In some embodiments, a ratio of a loading weight (LW) of the first cathode mixture layer 21 and the second cathode mixture layer 22 may be 30:70 to 70:30. Specifically, the ratio of the loading weight (LW) of the first cathode mixture layer 21 and the second cathode mixture layer 22 may be 40:60 to 60:40, or 45:55 to 55:45.

In some embodiments, the loading weight of the first cathode mixture layer 21 may be 1 mg/cm² and 20 mg/cm². For example, the loading weight of the first cathode mixture layer 21 may be greater than or equal to 5 mg/cm² and less than or equal to 15 mg/cm².

In some embodiments, the loading weight of the second cathode mixture layer 22 may be 1 mg/cm² and 20 mg/cm². For example, the loading weight of the second cathode mixture layer 22 may be 5 mg/cm² or more and 15 mg/cm² or less.

When the loading weight relationship and range of the first cathode mixture layer 21 and the second cathode mixture layer 22 are as described above, the capacity of the cathode 100 for a lithium secondary battery may be increased while also securing excellent lifespan performance.

In some embodiments, the lithium metal phosphate may be represented by the following chemical formula 1.

[Chemical Formula 1] LiMePO4

In chemical formula 1, Me is at least one element selected from the group consisting of Co, Ni, Fe, and Mn.

The lithium metal phosphate represented by chemical formula 1 may be a lithium metal oxide particle with an olivine structure and excellent structural stability. For example, the lithium metal phosphate may include a lithium iron phosphate (LFP)-based active material containing iron (Fe).

In some embodiments, the lithium metal phosphate may be a lithium manganese iron phosphate (LMFP)-based active material represented by the chemical formula LiMnₓFe₁₋ₓPO₄ (0<x<1). Specifically, in the chemical formula, 0.5≤x≤0.7 may be satisfied. The LMFP-based active material is an active material in which a portion of iron (Fe) in the LFP active material is replaced with manganese (Mn), and may have relatively superior energy density and low-temperature performance compared to the LFP-based active material. Therefore, when the cathode 100 for a lithium secondary battery includes an LMFP-based active material, a high-energy-density lithium secondary battery can be provided.

A particle composition of the lithium metal phosphate may be confirmed by inductively coupled plasma (ICP) analysis. For example, the lithium metal phosphate particles may be analyzed by ICP and the number of phosphorus atoms normalized to 1 to obtain a chemical formula.

In some embodiments, the lithium transition metal oxide may include a layered structure or crystal structure represented by the following chemical formula 2.

[Chemical Formula 2] LixNiₐCO_{b1}Mn_{b2}O_{2+z}

In chemical formula 2, 0.9≤x≤1.2, 0.6≤a≤0.99, 0.01≤b1+b2≤0.4, and -0.5≤z≤0.1 may be satisfied.

A chemical structure represented by chemical formula 2 represents a bonding relationship included in the layered structure or crystal structure of the cathode active material, and Ni, Co, and Mn may be provided as a main active element of the cathode active material. In other words, the chemical structure represented by chemical formula 2 is provided to express the bonding relationship of the main active element, and does not exclude other additional elements. Therefore, chemical formula 2 should be understood as a formula encompassing the introduction and substitution of additional elements.

In some embodiments, auxiliary elements may be further included in addition to the main active element to enhance chemical stability of the cathode active material or the layered structure/crystal structure. The auxiliary elements may be incorporated together into the layered structure/crystal structure to form a bond, and even in this case, it should be understood that the auxiliary elements are also included within a chemical structure range represented by chemical formula 2.

The auxiliary elements may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary elements may also act as auxiliary active elements contributing to capacity/output activity of the cathode active material, for example, together with Co or Mn, such as Al.

In some embodiments, the cathode active material may further include a coating material or doping material containing a coating element or doping element. For example, elements substantially identical to or similar to the auxiliary elements described above may be used as the coating element or doping element. For example, the auxiliary elements described above may be used alone or in combination of two or more as coating elements or doping elements. In this case, an upper operating voltage limit of a lithium secondary battery can be adjusted, thereby suppressing voltage decay in the battery.

The coating element or doping element may be present on a surface of particles of the cathode active material, or may penetrate through the surface of the particles of the cathode active material and be included in the bonding structure represented by chemical formula 2.

In some embodiments, the coating element may form a coating layer having a sea-type shape or a coating layer having an island-type shape.

In some embodiments, a content of the coating element in the particles of the cathode active material may be 500 to 8,000 ppm, 1,000 to 8,000 ppm, or 1,500 to 8,000 ppm based on the total weight of all elements excluding lithium and oxygen. When the content of the coating element is as described above, the initial capacity decrease and resistance increase of the lithium secondary battery can be prevented, and the voltage decay of the lithium secondary battery may be further suppressed.

In some embodiments, the coating material may be formed by a dry coating method or a wet coating method. For example, particles of the cathode active material and a coating source thereof can be dry mixed or wet mixed and heat treated (e.g., calcined or dried) to form a coating material on the surface of the particles of the cathode active material. Any coating source known in the art can be used as the coating source. For example, the coating source may contain B, Al, W, Zr, Ti, Mg, Co, etc.

In some embodiments, a content of Ni in the lithium transition metal oxide (e.g., a mole fraction of nickel among the total number of moles of nickel, cobalt, and manganese) may be 0.6 or more and 0.7 or less. Specifically, the content of Ni in the lithium transition metal oxide (for example, the mole fraction of nickel among the total number of moles of nickel, cobalt, and manganese) may be 0.6 or more and 0.65 or less. In this case, thermal stability may be superior to that of lithium transition metal oxides having a content of Ni of 0.7 or more.

A particle composition of the lithium transition metal oxide may be confirmed by inductively coupled plasma (ICP) analysis. For example, by analyzing the particles of the cathode active material using ICP and normalizing the number of oxygen atoms to 1.8 to 2.2 (for example, 2), the chemical formula of the cathode active material may be obtained.

In some embodiments, the lithium transition metal oxide may have a single particle form. Specifically, the lithium transition metal oxide may be a single particle comprised of a single crystal.

The term "single particle form" used herein is used to mean, for example, excluding secondary particles formed by aggregation of a plurality of primary particles. For example, in the lithium transition metal oxide, a secondary particle structure in which primary particles (e.g., more than 10, 20 or more, 30 or more, 40 or more, 50 or more, or the like) are assembled or aggregated can be excluded.

In addition, the term "single particle form" used herein does not exclude a case in which, for example, 2 to 10 single particles are not aggregated but are simply attached or are in contact to form a single body.

When the cathode 100 for the lithium secondary battery includes a lithium transition metal oxide having a single particle form, the energy density and life performance of the secondary battery can be further improved.

Whether the lithium transition metal oxide has a single particle form may be distinguished based on an ion image obtained by analyzing a cross-section of the active material particle using a focused ion beam (FIB). For example, if the active material particle has a polycrystalline structure, even if it is observed as a single particle in the cross-sectional image using a SEM, in the FIB analyzed image, two or more single crystals may be observed as particles composed of two or more crystals depending on the difference in crystal orientation. Therefore, when two or more single crystals due to differences in crystal orientation are not observed in the FIB analyzed image, it can be determined that the active material particle has a single particle form.

In the cathode 100 for the lithium secondary battery, a first cathode mixture layer 21, a lower layer adjacent to the cathode current collector 10 may include a spherical-type conductive material, and a second cathode mixture layer 22, an upper layer spaced apart from the cathode current collector 10 may include a needle-type conductive material, so that electrode resistance may be reduced and lifespan characteristics of the battery may be improved.

In this specification, the spherical-type conductive material may mean a conductive material having a spherical particle shape and having a relatively small aspect ratio (ratio of length/diameter). For example, the aspect ratio of the spherical-type conductive material may be 0.5 and 1.5. In some embodiments, a diameter (D50) of the spherical-type conductive material may be 10 and 500 nm.

For example, the spherical-type conductive material may include at least one of graphite, such as natural graphite or artificial graphite; and carbon black, such as acetylene black, Ketjen black, channel black, panes black, lamp black, or thermal black. In some embodiments, the spherical-type conductive material may include carbon black.

In this specification, the needle-type conductive material is a conductive material having an elliptical particle shape, which may mean a conductive material having a relatively large aspect ratio (ratio of length/diameter). For example, the aspect ratio of the needle-type conductive material may be 2 or more, 10 or more, 50 or more, or 100 or more, and 10,000 or less, 5,000 or less, 3,000 or less, or 1,000 or less.

For example, the needle-type conductive material may include conductive fibers such as carbon fibers and metal fibers; conductive tubes such as carbon nanotubes (CNTs) such as single-walled carbon nanotubes (SWCNTs) and multi-walled carbon nanotubes (MWCNTs); metal powder particles such as aluminum, and nickel powder particles; conductive whiskers such as zinc oxide and potassium titanate; conductive metal oxides such as titanium oxide; and conductive materials such as polyphenylene derivatives. In some embodiments, the needle-type conductive material may include carbon nanotubes (CNT).

In some embodiments, a content of the spherical-type conductive material included in the first cathode mixture layer 21 may be 0.3 wt% to 0.5 wt%. When the content of the spherical-type conductive material included in the first cathode mixture layer 21 is less than 0.3 wt%, it may be difficult to achieve the performance improvement effect due to the addition of the conductive material. When the content of the spherical-type conductive material exceeds 0.5 wt%, electrode rolling may not be performed properly, resulting in a decrease in the energy density of the electrode.

In some embodiments, a content of the needle-type conductive material included in the second cathode mixture layer 22 may be 0.5 wt% to 1.5 wt%. Specifically, the content of the needle-type conductive material included in the second cathode mixture layer 22 may be 0.6 wt% or more and 1.0 wt% or less. When the content of the needle-type conductive material included in the second cathode mixture layer 22 is excessively low, specifically, less than 0.5 wt%, the effect of reducing the resistance of the electrode and improving performance thereof may be insufficient, and when the content of the needle-type conductive material is excessively high, specifically, more than 1.5 wt%, the electrode capacity may be reduced due to a decrease in the content of the cathode active material.

In some embodiments, the first cathode mixture layer 21 may additionally include a needle-type conductive material. In these embodiments, the content of the needle-type conductive material in the second cathode mixture layer 22, the upper layer may be greater than or equal to the content of the needle-type conductive material in the first cathode mixture layer 21, the lower layer.

Specifically, the weight of the needle-type conductive material included in the first cathode mixture layer 21 may be less than or equal to the weight of the needle-type conductive material included in the second cathode mixture layer 22. In this case, the resistance in the second cathode mixture layer 22, the upper layer may be reduced to improve the performance of a cathode, and the amount of needle-type conductive material used can be adjusted within an appropriate range based on the entire cathode, thereby securing economic feasibility.

In some embodiments, the content of the needle-type conductive material included in the first cathode mixture layer 21 may be 0.5 wt% to 0.7 wt%. When the content of the needle-type conductive material included in the first cathode mixture layer 21 is less than 0.5 wt%, the effect of reducing resistance of the electrode and improving performance thereof may be insufficient, and when the content of the needle-type conductive material exceeds 0.7 wt%, the content of the needle-type conductive material, which is relatively expensive, may increase, which may result in a lack of cost competitiveness.

In some embodiments, the second cathode mixture layer may further include a spherical-type conductive material. In these embodiments, the content of the spherical-type conductive material included in the second cathode mixture layer 22 may be 0.1 wt% to 0.5 wt%. Specifically, the content of the spherical-type conductive material included in the second cathode mixture layer 22 may be 0.4 wt% or less and 0.3 wt% or more.

When the content of the spherical-type conductive material included in the second cathode mixture layer 22 is excessive, specifically, when the content of the spherical-type conductive material exceeds 0.5 wt%, electrode rolling may not be performed properly, which may decrease energy density of the electrode.

In some embodiments, the second cathode mixture layer 22 may not include a spherical-type conductive material. Specifically, the content of the spherical-type conductive material included in the second cathode mixture layer 22 may be 0 wt%. In this case, by increasing the content of the needle-type conductive material in the second cathode mixture layer 22, the upper layer, the electrode resistance can be reduced and the performance of the cathode may be improved.

In some embodiments, the first cathode mixture layer 21 and the second cathode mixture layer 22 may respectively further include a binder. The binder is not particularly limited. For example, the binder may include one or two or more of polyvinylidene fluoride, styrene butadiene rubber (SBR), polytetrafluoroethylene, vinylidene fluoride/hexafluoropropylene copolymer, polyacrylonitrile, and polymethyl methacrylate. The content of the binder included in the first cathode mixture layer 21 and the second cathode mixture layer 22 is not particularly limited, and may be, for example, 0.1 wt% to 10 wt%, respectively.

The cathode 100 for a lithium secondary battery according to the above-described embodiments may be manufactured by the following method.

### Method for Manufacturing Cathode for Lithium Secondary Battery

A method for manufacturing a cathode 100 for a lithium secondary battery according to an embodiment includes respectively manufacturing a first cathode slurry including a first cathode active material and a second cathode slurry including a second cathode active material; and forming a cathode mixture layer 20 on at least one surface of the cathode current collector 10, wherein the cathode mixture layer 20 includes a first cathode mixture layer 21 on the cathode current collector 10; and a second cathode mixture layer 22 on the first cathode mixture layer 21.

Detailed descriptions of the cathode current collector 10, the cathode mixture layer 20, the first cathode mixture layer 21, the second cathode mixture layer 22, and the like, are omitted as the descriptions overlap the above-described contents.

In some embodiments, the first cathode slurry and the second cathode slurry may be manufactured by mixing the first cathode active material and the second cathode active material with a solvent, respectively. The solvent is not particularly limited. For example, the solvent may be N-methyl-2-pyrrolidone (NMP).

In some embodiments, the first cathode slurry and the second cathode slurry may further include components such as a binder and a conductive material, respectively. Detailed descriptions of the binder and the conductive material are omitted as the descriptions overlap the above-described contents.

In some embodiments, the first cathode mixture layer 21 may be formed by applying the first cathode slurry onto at least one surface of the cathode current collector 10 and then drying the same. The second cathode mixture layer 22 may be formed by applying the first cathode slurry or the second cathode slurry onto the first cathode mixture layer 21 and then drying the same. According to an embodiment, the second cathode mixture layer 22 may be manufactured by applying the second cathode slurry onto the first cathode mixture layer 21 formed previously and then drying the same. According to another embodiment, the first cathode slurry and the second cathode slurry may be simultaneously applied onto the surface of the cathode current collector 10 and then simultaneously dried to form a first cathode mixture layer 21 and a second cathode mixture layer 22 simultaneously.

A method for applying the first cathode slurry and the second cathode slurry is not particularly limited. For example, the first cathode slurry and the second cathode slurry may be applied using methods such as bar coating, casting, spraying, or the like.

In some embodiments, drying of the first cathode slurry and the second cathode slurry may be performed at a temperature of 100 to 200°C. For example, the drying of the first cathode slurry and the second cathode slurry may be performed at a temperature of 130 to 170°C.

### Lithium secondary battery

A lithium secondary battery according to an embodiment includes the cathode 100 for a lithium secondary battery according to any one of the above-described embodiments. For example, the lithium secondary battery may include a unit cell including the above-described cathode, an anode, and a separator for a lithium secondary battery. The separator may be disposed between the cathode and the anode described above within the unit cell.

The anode is not particularly limited. For example, the anode may include an anode current collector; and an anode mixture layer on at least one surface of the anode current collector.

Components of the anode current collector are not particularly limited. For example, the anode current collector may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In some embodiments, the anode current collector may be copper foil (Cu-foil).

A thickness of the anode current collector is not particularly limited. For example, the thickness of the anode current collector 10 may be 0.1 to 50 µm.

The anode mixture layer may include an anode active material. The anode active material is not particularly limited. For example, the anode active material may be at least one selected from the group consisting of carbon-based materials such as crystalline carbon, amorphous carbon, carbon composites, and carbon fibers; lithium metal; lithium alloys; silicon-containing materials, and tin-containing materials.

The crystalline carbon may be, for example, graphite-based carbon such as natural graphite, artificial graphite, graphitized cokes, graphitized mesocarbon microbeads (MCMB), and graphitized mesophase pitch-based carbon fibers (MPCF).

The amorphous carbon may be, for example, hard carbon, soft carbon, cokes, mesocarbon microbeads (MCMB), or mesophase pitch-based carbon fibers (MPCF).

Elements included in the lithium alloy may be, for example, aluminum, zinc, bismuth, cadmium, antimony, silicon, lead, tin, gallium or indium.

The silicon-containing material is not particularly limited as long as it contains silicon, and may be an active material that can be alloyed with lithium (Li). For example, the silicon-containing material may be at least one selected from the group consisting of silicon (Si), silicon oxide (SiOₓ; 0<x<2), metal-doped silicon oxide (SiOₓ; 0<x<2), carbon-coated silicon oxide (SiOₓ; 0<x<2), silicon-carbon composite (Si-C), and silicon alloy.

The anode mixture layer may further include a binder. The binder is not particularly limited. For example, the binder may be any one of a rubber-based binder such as styrene-butadiene rubber (SBR), fluorine-based rubber, ethylene propylene rubber, butadiene rubber, isoprene rubber, and silane-based rubber; a cellulose-based binder such as carboxymethylcellulose (CMC), hydroxypropylmethylcellulose, methylcellulose, or an alkali metal salt thereof; and combinations thereof.

The anode mixture layer may further include a conductive material. The conductive material is not particularly limited. For example, the conductive material may be at least one selected from a particle-type carbon material and a fibrous carbon material. The particle-type carbon material may be carbon black such as Super-P, Super-C, acetylene black, Ketjen black, graphite, or the like, and the fibrous carbon material may be carbon fiber, carbon nanotubes (CNT), vapor-grown carbon fiber (VGCF), or the like.

The separator is not particularly limited. For example, the separator may include a porous polymer film formed from a polyolefin polymer such as an ethylene homopolymer, a propylene homopolymer, an ethylene/butene copolymer, an ethylene/hexene copolymer, or an ethylene/methacrylate copolymer. In addition, the separator may include a non-woven fabric formed of high-melting-point glass fibers, polyethylene terephthalate fibers, or the like.

In some embodiments, the lithium secondary battery can be manufactured by accommodating the above-described unit cell in a pouch, a battery case, and then injecting an electrolyte.

The electrolyte may include an organic solvent and a lithium salt. The organic solvent serves as a medium through which ions involved in an electrochemical reaction of a battery may move, and the organic solvent may be, for example, a carbonate-based, ester-based, ether-based, ketone-based, alcohol-based or aprotic solvent, used alone or in combination of two or more thereof. When two or more of the organic solvent are used in combination thereof, a mixing ratio may be appropriately adjusted according to the desired battery performance.

The lithium salt may be a substance that is dissolved in an organic solvent and acts as a source of lithium ions in the battery, enables the basic operation of a lithium secondary battery, and promotes the movement of lithium ions between the cathode and the anode. The lithium salt may be any known material at a concentration appropriate for the purpose. The electrolyte may further include a known solvent and a known additive, to improve charge/discharge characteristics, flame retardancy characteristics, or the like, as needed.

In some embodiments, the unit cell may not include a separator between the cathode and the anode, and may include a solid electrolyte. The solid electrolyte is not particularly limited, and may be, for example, an oxide-based solid electrolyte, a sulfide-based solid electrolyte, or a polymer-based solid electrolyte.

(Aspect 1) As a cathode for a lithium secondary battery including a cathode current collector; and a cathode mixture layer on at least one surface of the cathode current collector, wherein the cathode mixture layer includes a first cathode mixture layer on the cathode current collector; and a second cathode mixture layer on the first cathode mixture layer, the first cathode mixture layer and the second cathode mixture layer respectively independently include lithium metal phosphate and lithium transition metal oxide as active materials, a weight of the lithium metal phosphate included in the first cathode mixture layer exceeds a weight of the lithium transition metal oxide, the first cathode mixture layer includes a spherical-type conductive material, and the second cathode mixture layer includes a needle-type conductive material.

(Aspect 2) The cathode for a lithium secondary battery of aspect 1, wherein a content of the spherical-type conductive material included in the first cathode mixture layer is 0.3 wt% to 0.5 wt%.

(Aspect 3) The cathode for a lithium secondary battery of any one of aspects 1 to 2, wherein a content of the needle-type conductive material included in the second cathode mixture layer is 0.5 wt% to 1.5 wt%.

(Aspect 4) The cathode for a lithium secondary battery of any one of aspects 1 to 3, wherein the first cathode mixture layer further comprises a needle-type conductive material.

(Aspect 5) The cathode for a lithium secondary battery of any one of aspects 1 to 4, wherein the second cathode mixture layer does not include a spherical-type conductive material.

(Aspect 6) The cathode for a lithium secondary battery of any one of aspects 1 to 5, wherein the weight of the needle-type conductive material included in the first cathode mixture layer is less than or equal to the weight of the needle-type conductive material included in the second cathode mixture layer.

(Aspect 7) The cathode for a lithium secondary battery of any one of aspects 1 to 6, wherein the content of the needle-type conductive material included in the first cathode mixture layer is 0.5 wt% to 0.7 wt%.

(Aspect 8) The cathode for a lithium secondary battery of any one of aspects 1 to 7, wherein the second cathode mixture layer further comprises a spherical-type conductive material, and the content of the spherical-type conductive material included in the second cathode mixture layer is 0.1 wt% to 0.5 wt%.

(Aspect 9) The cathode for a lithium secondary battery of any one of aspects 1 to 8, wherein the spherical-type conductive material comprises carbon black.

(Aspect 10) The cathode for a lithium secondary battery of any one of aspects 1 to 9, wherein the needle-type conductive material comprises carbon nanotubes (CNT).

(Aspect 11) A lithium secondary battery, comprising: the cathode for a lithium secondary battery of aspect 1.

### Example

### 1. Manufacturing of Cathode and Secondary Battery

### 1) Manufacturing of Cathode for Lithium Secondary Battery

### (1) Example 1

An LMFP-based active material LiMn_{0.6}Fe_{0.4}PO₄ was prepared as lithium metal phosphate, an NCM-based active material in the form of a single particle represented by chemical formula LiNi_{0.6}Co_{0.1}Mn_{0.3}O₂ was prepared as lithium transition metal oxide, polyvinylidene fluoride (PVDF) was prepared as a binder, and carbon black and multi-walled carbon nanotubes (MWCNT) were prepared as a spherical-type conductive material and a needle-type conductive material, respectively.

Based on a solids content, 87.975 wt% of lithium metal phosphate, 9.775 wt% of lithium transition metal oxide, 1.25 wt% of binder (PVDF), 0.6 wt% of a needle-type conductive material (CNT), and 0.4 wt% of spherical-type conductive material (carbon black) were mixed with a solvent (NMP) to manufacture a first cathode slurry. A weight ratio of lithium metal phosphate and lithium transition metal oxide in the final manufactured first cathode slurry was 9:1.

In addition, based on the solids content, 48.875 wt% of lithium metal phosphate, 48.875 wt% of lithium transition metal oxide, 1.25 wt% of binder (PVDF), and 1 wt% of a needle-type conductive material (CNT) were mixed with a solvent (NMP), to manufacture a second cathode slurry. The weight ratio of lithium metal phosphate and lithium transition metal oxide in the final manufactured second cathode slurry was 5:5.

The first cathode slurry was applied at a loading weight of 10 mg/cm² on one surface of a cathode current collector (Al-foil) having a thickness of 12 µm, and at the same time, the second cathode slurry was applied at a loading weight of 10 mg/cm² onto a surface of the first cathode slurry. In this case, the first cathode slurry and the second cathode slurry were applied so that the loading weight ratio of the finally manufactured first cathode mixture layer (lower layer) and second cathode mixture layer (upper layer) was 5:5.

Thereafter, a cathode of Example 1 with an electrode thickness (thickness including a current collector) of 152um and an electrode density of 2.857 g/cc was manufactured through the drying and rolling described above. In the final manufactured cathode, the weight ratio of lithium metal phosphate and lithium transition metal oxide was 7:3, based on the entire electrode.

### (2) Example 2

A cathode of Example 2 was manufactured in the same manner as Example 1, except that the second cathode slurry includes 0.6 wt% of a needle-type conductive material (CNT) and 0.4 wt% of a spherical-type conductive material (carbon black) instead of 1 wt% of a needle-type conductive material (CNT), based on the solids content.

### (3) Comparative Example 1

A cathode of Comparative Example 1 was manufactured in the same manner as Example 1, except that the first cathode slurry and the second cathode slurry respectively include only 0.6 wt% (based on a solids content) of a needle-type conductive material (CNT) as a conductive material.

Specifically, based on the solids content, the first cathode slurry of Comparative Example 1 was manufactured to include, 88.335 wt% of lithium metal phosphate, 9.815 wt% of lithium transition metal oxide, 1.25 wt% of binder (PVDF), and 0.6 wt% of a needle-type conductive material (CNT), and based on the solids content, the second cathode slurry was manufactured to include 49.075 wt% of lithium metal phosphate, 49.075 wt% of lithium transition metal oxide, 1.25 wt% of binder (PVDF), and 0.6 wt% of a needle-type conductive material (CNT).

### (4) Comparative Example 2

A cathode of Comparative Example 2 was manufactured in the same manner as Example 2, except that a structure of the first cathode mixture layer, as a lower layer, and a structure of the second cathode mixture layer, as an upper layer were opposite to each other by applying the first cathode slurry and the second cathode slurry in reverse order.

### (5) Comparative Example 3

Based on a solids content, a third cathode slurry was prepared by mixing 68.425 wt% of lithium metal phosphate, 29.325 wt% of lithium transition metal oxide, 1.25 wt% of a binder (PVDF), 0.6 wt% of a needle-type conductive material (CNT), and 0.4 wt% of a spherical-type conductive material (carbon black) with a solvent (NMP). A weight ratio of lithium metal phosphate and lithium transition metal oxide in the final manufactured third cathode slurry was 7:3.

Thereafter, a cathode of Comparative Example 3 was manufactured in the same manner as Example 1, except that only the third cathode slurry was applied on one side of the cathode current collector (Al-foil) at a loading weight of 20 mg/cm² to form a single layer of the cathode mixture layer.

### 2) Manufacturing of Secondary Battery

An anode for a lithium secondary battery was manufactured by applying an anode slurry including anode active materials (artificial graphite and natural graphite) to a copper foil (Cu-foil) with a thickness of 6µm and then drying the same. The manufactured pouch-type lithium secondary battery was applied as a secondary battery sample for Examples and Comparative Examples.

**[Table 1]**

| | **Electrode structure** | **Type and weight ratio of upper and lower active materials** | | **Type and content of upper and lower conductive materials** | |
|---|---|---|---|---|---|
| | | **Lower layer (first cathode mixture layer)** | **Upper layer (second cathode mixture layer)** | **Lower layer (first cathode mixture layer)** | **Upper layer (second cathode mixture layer)** |
| **Example 1** | Dual Layer | LMFP + NCM (9:1) | LMFP + NCM (5:5) | CNT 0.6 wt% Carbon black 0.4 wt% | CNT 1.0 wt% |
| **Example 2** | Dual Layer | LMFP + NCM (9:1) | LMFP + NCM (5:5) | CNT 0.6 wt% Carbon black 0.4 wt% | CNT 0.6 wt% Carbon black 0.4 wt% |
| **Comparative Example 1** | Dual Layer | LMFP + NCM (9:1) | LMFP + NCM (5:5) | CNT 0.6 wt% | CNT 0.6 wt% |
| **Comparative Example 2** | Dual Layer | LMFP + NCM (5:5) | LMFP + NCM (9:1) | CNT 0.6 wt% Carbon black 0.4 wt% | CNT 0.6 wt% Carbon black 0.4 wt% |
| **Comparative Example 3** | Single Layer | LMFP + NCM (7:3) | | CNT 0.6 wt% Carbon black 0.4 wt% | |

### 2. Evaluation of Cathode and Secondary Battery

### 1) DC-IR Measurement

Secondary battery samples of Examples and Comparative Examples were charged at room temperature at 0.3C at 4.3V at room temperature using constant current (CC)/ constant voltage (CV) methods, and discharged twice at 0.3C using a CC method. The battery was discharged from the charged state to a 50% point of SOC with a constant current (CC) of 0.3C, and resistance thereof when discharged from the 50% point of SOC to 1C was measured using DC-IC.

### 2) Lifespan Performance Evaluation

For batteries of Examples and Comparative Examples, lifespan characteristics were evaluated in a DOD94%(SOC 2%-96%) range at a temperature of 45°C. The battery was charged at 0.3C under constant current/constant voltage (CC/CV) conditions to a voltage corresponding to SOC of 96%, cut off at 0.05C, and then discharged at 0.5C under constant current (CC) conditions to a voltage corresponding to SOC of 2%, and the discharge capacity was measured. The charging and discharging were repeated for 250 cycles to measure a capacity retention rate(%). The capacity retention rate(%) relative to the initial discharge capacity was measured to evaluate the life characteristics at 45°C, and the results are shown in Table 2 below.

**[Table 2]**

| | **DC-IR (mΩ)** | **45°C lifespan performance (@250 times)** |
|---|---|---|
| **Example 1** | 4.2 | 94.2 |
| **Example 2** | 4.3 | 93.8 |
| **Comparative Example 1** | 4.5 | 93.4 |
| **Comparative Example 2** | 5.4 | 93.1 |
| **Comparative Example 3** | 5.6 | 93.7 |

Referring to Table 1 and Table 2 above, when a cathode having a mixed composition of lithium metal phosphate and lithium transition metal oxide has a single layer structure, it can be confirmed that the cell resistance is relatively high and the lifespan performance is poor (Comparative Example 3). In addition, even if the cathode having a mixed composition of lithium metal phosphate and lithium transition metal oxide has a dual layer structure, it can be confirmed that the cell resistance is relatively high and the life performance is poor when a content of lithium metal phosphate and the content of lithium transition metal oxide included in the lower layer (first cathode mixture layer) are the same (Comparative Example 2).

Furthermore, even if the content of lithium metal phosphate included in the lower layer (first cathode mixture layer) as a cathode having a mixed composition of lithium metal phosphate and lithium transition metal oxide is greater than the content of lithium transition metal oxide, it can be confirmed that the cell resistance is relatively high and the lifespan performance is poor when the lower layer (first cathode mixture layer) does not include a spherical-type conductive material (carbon black) (Comparative Example 1).

Therefore, as in Examples 1 and 2, in a cathode having a dual layer having a mixed composition of lithium metal phosphate and lithium transition metal oxide, when the content of lithium metal phosphate included in the lower layer (first cathode mixture layer) is greater than the content of lithium transition metal oxide, and the lower layer (first cathode mixture layer) includes a spherical-type conductive material and the upper layer (second cathode mixture layer) includes a needle-type conductive material, it is expected that a lithium secondary battery having low cell resistance and excellent lifespan performance may be provided.

As set forth above, according to an embodiment of the disclosure, safety of a secondary battery may be improved.

According to another embodiment of the disclosure, a cathode for a lithium secondary battery having high energy density may be provided.

According to another embodiment of the disclosure, a cathode for a lithium secondary battery having excellent lifespan performance may be provided.

Only specific examples of implementations of certain embodiments may be described. Variations, improvements and enhancements of the disclosed embodiments and other embodiments may be made based on the disclosure of this patent document.

## Claims

1. As a cathode for a lithium secondary battery including a cathode current collector; and a cathode mixture layer on at least one surface of the cathode current collector,
wherein the cathode mixture layer includes a first cathode mixture layer on the cathode current collector; and a second cathode mixture layer on the first cathode mixture layer,
the first cathode mixture layer and the second cathode mixture layer respectively independently include lithium metal phosphate and lithium transition metal oxide as active materials,
a weight of the lithium metal phosphate included in the first cathode mixture layer exceeds a weight of the lithium transition metal oxide,
the first cathode mixture layer includes a spherical-type conductive material, and
the second cathode mixture layer includes a needle-type conductive material.

2. The cathode for a lithium secondary battery of claim 1, wherein a content of the spherical-type conductive material included in the first cathode mixture layer is 0.3 wt% to 0.5 wt%.

3. The cathode for a lithium secondary battery of claim 1, wherein a content of the needle-type conductive material included in the second cathode mixture layer is 0.5 wt% to 1.5 wt%.

4. The cathode for a lithium secondary battery of claim 1, wherein the first cathode mixture layer further comprises a needle-type conductive material.

5. The cathode for a lithium secondary battery of claim 1, wherein the second cathode mixture layer does not include a spherical-type conductive material.

6. The cathode for a lithium secondary battery of claim 4, wherein the weight of the needle-type conductive material included in the first cathode mixture layer is less than or equal to the weight of the needle-type conductive material included in the second cathode mixture layer.

7. The cathode for a lithium secondary battery of claim 4, wherein the content of the needle-type conductive material included in the first cathode mixture layer is 0.5 wt% to 0.7 wt%.

8. The cathode for a lithium secondary battery of claim 1, wherein the second cathode mixture layer further comprises a spherical-type conductive material, and
the content of the spherical-type conductive material included in the second cathode mixture layer is 0.1 wt% to 0.5 wt%.

9. The cathode for a lithium secondary battery of claim 1, wherein the spherical-type conductive material comprises carbon black.

10. The cathode for a lithium secondary battery of claim 1, wherein the needle-type conductive material comprises carbon nanotubes (CNT).

11. A lithium secondary battery, comprising:
the cathode for a lithium secondary battery of claim 1.
